# EUROPÄISCHE PATENTANMELDUNG

(11) **EP 2 645 588 A1**
(43) Veröffentlichungstag der Anmeldung: **02.10.2013**
(21) Anmeldenummer: 12162335.9
(22) Anmeldetag: 30.03.2012
(51) Int. Cl.: H04B 5/00, H04B 17/00, G06K 7/00

(54) **Verfahren und Vorrichtung zur Funktionsüberprüfung einer NFC-Einrichtung**

(71) Anmelder: Comprion GmbH, 33100 Paderborn (DE)
(72) Erfinder: Jahnich, Michael, 33098 Paderborn (DE); Sandschneider, Hajo, 33098 Paderborn (DE); Borris, Roland, 59494 Soest (DE)
(74) Vertreter: Ostermann, Thomas

(57) **Zusammenfassung**

Die Erfindung betrifft ein Verfahren zur Funktionsprüfung einer NFC-Einrichtung, wobei Testdaten von einer NFC-Prüfeinrichtung in der Nähe derselben positionierten NFC-Einrichtung mittels eines Koppelfeldes übertragen werden und wobei das Testergebnis angezeigt wird, wobei gleichzeitig eine Koppelfeldprüfung und eine Datenverarbeitungsprüfung durchgeführt wird, wobei bei der Koppelfeldprüfung das Vorhandensein einer durch die NFC-Einrichtung erzeugten Nahkoppelfeldes über eine erste Koppeleinheit der NFC-Prüfeinrichtung detektiert und angezeigt wird, bei der Datenverarbeitungsprüfung die Testdaten über eine zweite Koppeleinheit der NFC-Prüfeinrichtung an eine Koppeleinheit der NFC-Einrichtung übertragen werden und dann das Testergebnis in der NFC-Einrichtung und/oder in der NFC-Prüfeinrichtung angezeigt wird.

## Beschreibung

Die Erfindung betrifft ein Verfahren zur Funktionsüberprüfung einer NFC-Einrichtung, wobei Testdaten von einer NFC-Prüfeinrichtung an die in der Nähe derselben positionierten NFC-Einrichtung mittels eines Nahkoppelfeldes übertragen werden und wobei das Testergebnis angezeigt wird.

Ferner betrifft die Erfindung eine Vorrichtung zur Funktionsüberprüfung einer NFC-Prüfeinrichtung, die über einen Testdatenspeicher und eine Koppeleinheit verfügt, so dass in dem Testdatenspeicher gespeicherte Testdaten mittels der Koppeleinheit über ein Nahkoppelfeld an eine Koppeleinheit der NFC-Einrichtung übertragbar sind und dass die NFC-Einrichtung ein NFC-Modul zur Signalaufbereitung und zur Weiterverarbeitung der Testdaten aufweist.

Aus der WO 2010/043646 A1 ist ein Verfahren sowie eine Vorrichtung zur Funktionsüberprüfung einer NFC-Einrichtung bekannt, wobei als eine die NFC-Einrichtung zu prüfende Prüfeinrichtung ein Mobiltelefon mit einer entsprechenden Prüfapplikation eingesetzt wird. Wenn die NFC-Prüfeinrichtung und die NFC-Einrichtung relativ nah zueinander positioniert sind, können über das sich ausbildende Nahkoppelfeld Testdaten von der NFC-Prüfeinrichtung zu der NFC-Einrichtung übertragen werden. Ist der in der NFC-Einrichtung integrierte Chip in Ordnung bzw. ist die Verbindungsleitung zwischen dem Chip und der Koppeleinheit der NFC-Einrichtung nicht beschädigt, kann die NFC-Einrichtung ein Antwortsignal generieren, mittels dessen die Funktionsfähigkeit der NFC-Einrichtung detektiert werden kann. Das bekannte Prüfverfahren nutzt Applikationen, die auf die NFC-Prüfeinrichtung geladen werden können. Wenn mehrere unterschiedliche Funktionsüberprüfungen erfolgen sollen, müssen entsprechende Prüfapplikationen heruntergeladen in der NFC-Prüfeinrichtung abgespeichert werden, um dann mehrere Funktionsüberprüfungen sequenziell durchführen zu können.

Aufgabe der vorliegenden Erfindung ist es daher, ein Verfahren und eine Vorrichtung zur Funktionsüberprüfung einer NFC-Einrichtung derart anzugeben, dass auf effektive Weise eine schnelle und umfassende Überprüfung unterschiedlicher Funktionen der NFC-Einrichtung gewährleistet ist.

Zur Lösung der Aufgabe ist das erfindungsgemäße Verfahren in Verbindung mit dem Oberbegriff des Patentanspruchs 1 dadurch gekennzeichnet, dass gleichzeitig eine Koppelfeldprüfung und eine Datenverarbeitungsprüfung durchgeführt werden, wobei bei der Koppelfeldprüfung das Vorhandensein eines durch die NFC-Einrichtung erzeugten Nahkoppelfeldes über eine erste Koppeleinheit der NFC-Prüfeinrichtung detektiert und angezeigt wird und bei der Datenverarbeitungsprüfung die Testdaten über eine zweite Koppeleinheit der NFC-Prüfeinrichtung an eine Koppeleinheit der NFC-Einrichtung übertragen werden und dann das Testergebnis in der NFC-Einrichtung und/oder in der NFC-Prüfeinrichtung angezeigt wird.

Vorteilhaft ermöglicht die Erfindung die gleichzeitige Überprüfung von mehreren Betriebsfunktionen einer NFC-Einrichtung. Nach der Erfindung können mindestens eine Koppelfeldüberprüfung zur Überprüfung des Vorhandenseins einer durch die NFC-Einrichtung erzeugten Nahkoppelfeldes und eine Datenverarbeitungsprüfung über separate Koppeleinheiten der NFC-Prüfeinrichtung erfolgen. Grundgedanke der Erfindung ist es, eine NFC-Prüfeinrichtung mit mindestens zwei Kommunikationszweigen bzw. Schnittstellen vorzusehen, damit eine gleichzeitige Überprüfung unterschiedlicher Funktionen gewährleistet ist. Vorteilhaft kann hierdurch relativ einfach und schnell in der Produktion von NFC-Einrichtungen oder nach einer Reparatur derselben eine Prüfung sowohl auf physikalischer Ebene (Energieübertragung) als auch auf logischer Ebene (Datenübertragung) erfolgen. Die NFC-Einrichtung ist stets ein aktives Gerät, beispielsweise ein Mobiltelefon, das über eine eigene Stromversorgung verfügt.

Zur Lösung der Aufgabe ist die Erfindung in Verbindung mit dem Oberbegriff des Patentanspruchs 2 dadurch gekennzeichnet, dass die NFC-Prüfeinrichtung einen Koppelfeldprüfzweig zur Prüfung des Vorhandenseins eines von der NFC-Einrichtung erzeugten Nahkoppelfeldes aufweist, wobei der Koppelfeldprüfzweig ein mit einer ersten Koppeleinheit der NFC-Prüfeinrichtung verbundenes Signalaufbereitungsmodul zur Aufbereitung eines mittels der ersten Koppeleinheit erfassten Nahkoppelfeldsignals und ein Anzeigemodul zur Anzeige eines aus dem Nahkoppelfeldsignal aufbereiteten Testergebnissignals, das die NFC-Prüfeinrichtung einen Datenverarbeitungsprüfzweig zur Überprüfung einer Datenübertragung zu der NFC-Einrichtung aufweist, wobei der Datenverarbeitungsprüfzweig einen Testdatenspeicher und eine zweite Koppeleinheit aufweist, so dass Testdaten an das NFC-Modul der NFC-Einrichtung übertragbar und in dieser verarbeitbar sind, und dass Mittel vorgesehen sind zur Signalisierung des Testergebnisses.

Der besondere Vorteil der erfindungsgemäßen Vorrichtung besteht darin, dass durch den Aufbau von mehreren Prüfzweigen in der NFC-Prüfeinrichtung das gleichzeitige Prüfen unterschiedlicher Funktionen der NFC-Einrichtung gewährleistet ist. Die Kommunikationsschnittstellen der Prüfzweige sind so aufeinander abgestimmt, dass quasi gleichzeitig eine Kommunikation der Prüfzweige mit der NFC-Einrichtung gewährleistet ist. Vorteilhaft kann auf diese Weise relativ schnell die NFC-Einrichtung auf das Vorhandensein mehrerer Funktionen geprüft werden.

In einer bevorzugten Ausführungsform der Erfindung ist der Koppelfeldprüfzweig und Datenverarbeitungsprüfzweig auf demselben Schaltungsträger angeordnet, so dass beide Prüfungen in einem einzigen Arbeitsschritt durchgeführt werden können.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigt:
- Figur: eine schematische Darstellung einer erfindungsgemäßen Vorrichtung zur Funktionsüberprüfung.

Eine Vorrichtung zur Funktionsüberprüfung besteht im Wesentlichen aus einer NFC-Prüfeinrichtung 1, die als mobiles Gerät mit einer eigenen Stromversorgung enthaltend eine Batterie oder einen Akku ausgebildet ist. Diese NFC-Prüfeinrichtung 1 kann zur Funktionsüberprüfung einer NFC-Einrichtung 2 manuell in die Nähe derselben gebracht werden, so dass beispielsweise während eines Produktionsvorganges zur Herstellung der NFC-Einrichtung 2 oder im Rahmen eines Wartung- oder Reparaturvorgangs, eine Funktionsüberprüfung stattfinden kann. Die NFC-Einrichtung 2 kann beispielsweise als ein Mobiltelefon ausgebildet sein, das ein NFC-Signalmodul 3 sowie ein NFC-Verarbeitungsmodul aufweisen kann, so dass über eine Koppeleinheit 5 Daten entsprechend der ISO 14443 bzw. ISO 15693 von und zu einer anderen NFC-Einrichtung 2 übertragbar sind.

Die NFC-Prüfeinrichtung 1 ist derart ausgebildet, dass sie mehrere (mindestens zwei) Funktionsprüfungen der NFC-Einrichtung 2 gleichzeitig durchführen kann. Im vorliegenden Ausführungsbeispiel weist die NFC-Prüfeinrichtung 1 zwei parallele Funktionsprüfzweige auf, die über ein Nahkoppelfeld 6 mit derselben NFC-Einrichtung 2 kommunizieren können.

Ein erster Funktionsprüfzweig ist als ein Koppelfeldprüfzweig 7 zur Prüfung des Vorhandenseins eines von der NFC-Einrichtung 2 erzeugten Nahkoppelfeldes 6 ausgebildet. Hierzu weist der Koppelfeldprüfzweig 7 eine erste Koppeleinheit 8 auf, die ausschließlich zum Empfang bzw. Detektion des Nahkoppelfeldes 6 ausgelegt ist. Im vorliegenden Ausführungsbeispiel erfolgt die Kommunikation zwischen der NFC-Prüfeinrichtung 1 und der NFC-Einrichtung 2 über eine induktive Kopplung. Die erste Koppeleinheit 8 ist daher als eine Empfangsantenne ausgebildet, an die sich ein Signalaufbereitungsmodul 9 und ein Anzeigemodul 10 anschließen. Das Signalaufbereitungsmodul 9 weist ein Kondensator-Widerstands-Netzwerk 11 auf, das mit der Empfangsantenne 8 einen Schwingkreis bildet. Dieser Schwingkreis weist eine mit der Übertragungsfrequenz der NFC-Einrichtung 2 übereinstimmende Resonanzfrequenz auf. Die Koppeleinheit 5 der NFC-Einrichtung 2 weist eine Sende- bzw. Empfangsspule auf. Diese Spule ist mit dem einem NFC-Signalverarbeitungsmodul 3 verbunden, das - wie das Signalaufbereitungsmodul 9 der NFC-Prüfeinrichtung 1 - ein Kondensator-Widerstands-Netzwerk aufweist, und zwar zur Bildung eines Schwingkreises mit einer zu der Übertragungfrequenz übereinstimmenden Resonanzfrequenz. Vorzugsweise werden die Koppeleinheiten 5, 8 durch die Signalaufbereitungsmodule 3, 9 auf die Trägerfrequenz 13,56 MHz abgestimmt.

Das Signalaufbereitungsmodul 9 der NFC-Prüfeinrichtung 1 weist ferner einen Gleichrichter 14 auf, so dass bei Vorhandensein des detektierten Nahkoppelfeldes 6 ein Aktivierungssignal an das mit einer LED-Lichtquelle 12 versehene Anzeigemodul 10 abgegeben werden kann. Der LED-Lichtquelle 12 ist eine Zenerdiode 15 parallel geschaltet, um sie vor Überspannungen zu schützen.

Ein zweiter Funktionsprüfzweig ist als ein Datenverarbeitungsprüfzweig 16 ausgebildet zur Datenverarbeitungsprüfung der NFC-Einrichtung 2. Der Datenverarbeitungsprüfzweig 16 weist eine zweite Koppeleinheit 17 auf, die mit einem kontaktlosen Speicherchip 18 einer kontaktlosen Karte galvanisch verbunden ist. Die zweite Koppeleinheit 17 weist wie die erste Koppeleinheit 8 eine Spule auf, die auf die Übertragungsfrequenz im Sinne einer Resonanz abgestimmt ist.

Die elektrischen Bauelemente des Koppelfeldprüfzweiges 7 und des Datenverarbeitungsprüfzweiges 16 sind auf einem gemeinsamen Schaltungsträger (Leiterplatte) 19 angeordnet. Durch eine nichtdargestellte Steuereinheit können die Funktionsprüfungen des Koppelfeldprüfzweiges 7 und des Datenverarbeitungsprüfzweiges 16 gleichzeitig durchgeführt werden.

Bei der Koppelfeldprüfung wird, nachdem die NFC-Prüfeinrichtung 1 in der Nähe von der NFC-Einrichtung 2 positioniert und die NFC-Einrichtung 2 eingeschaltet worden ist, das von der NFC-Einrichtung 2 erzeugte Nahkoppelfeld 6 mittels der ersten Koppeleinheit 8 detektiert. Übersteigt das hierbei detektierte und in dem Signalverarbeitungsmodul 9 weiterverarbeitete Nahkoppelfeldsignal einen vorgegebenen Schwellwert, nämlich die Durchlassspannung der LED-Lichtquelle 10, wird mittels der LED-Lichtquelle 10 ein das Vorhandensein des Nahkoppelfeldes 6 repräsentierendes Leuchtsignal ausgesandt. Weist das detektierte Nahkoppelfeldsignal einen relativ kleinen Wert auf oder ist der Wert Null, kann die LED-Lichtquelle 10 nicht angesteuert werden, so dass kein Leuchtsignal als Testergebnissignal abgegeben wird. In diesem Fall wird erkannt, dass kein Nahkoppelfeld 6 vorhanden ist. Ein Fehler der NFC-Einrichtung 2 auf physikalischer Ebene ist somit erkannt.

Gleichzeitig mit der Koppelfeldprüfung erfolgt die Datenverarbeitungsprüfung, wobei von dem kontaktlosen Speicherchip 18 Testdaten, beispielsweise eine standardisierte NFC-Nachricht, ausgelesen und über die zweite Koppeleinheit 17 an die NFC-Einrichtung 2 übertragen wird. Nach Signalverarbeitung des empfangenen Signals wird dasselbe in den NFC-Verarbeitungsmodul 4 weiterverarbeitet und als Testergebnis gegebenenfalls in einer nicht dargestellten Anzeigeeinheit der NFC-Einrichtung 2 dargestellt. In diesem Fall kann festgestellt werden, dass die Datenübertragung und/oder Datenverarbeitung in der NFC-Einrichtung 2 in Ordnung ist. Kann das übertragene Nachrichtensignal nicht in der NFC-Einrichtung 2 dargestellt oder angezeigt werden, kann auf einen Fehler bei der Datenübertragung innerhalb der NFC-Einrichtung 2 geschlossen werden.

In Abhängigkeit von dem Prüfergebnis können dann der oder die Funktionsfehler in der NFC-Einrichtung 2 behoben werden. Während des Prüfvorganges befindet sich die NFC-Prüfeinrichtung 1 in einem Lesemodus.

Die NFC-Einrichtung 2 kann als ein Mobiltelefon oder beispielsweise als eine mit einer Energieversorgung versehene kontaktlose Karte ausgebildet sein.

Nach einer nicht dargestellten alternativen Ausführungsform der Erfindung kann das Testergebnis bei der Datenverarbeitungsprüfung auch in der NFC-Prüfeinrichtung 1 dargestellt werden. Hierzu müsste das entsprechende Signal von dem NFC-Verarbeitungsmodul 4 zurück an die Koppeleinheit 5 übertragen werden, von wo aus es vermittels des Nahkoppelfeldes 6 in den ersten Funktionsüberprüfungszweig 7 eingeleitet bzw. von demselben detektiert wird. Mittels des Anzeigemoduls 10 kann das Testergebnis dann angezeigt werden.

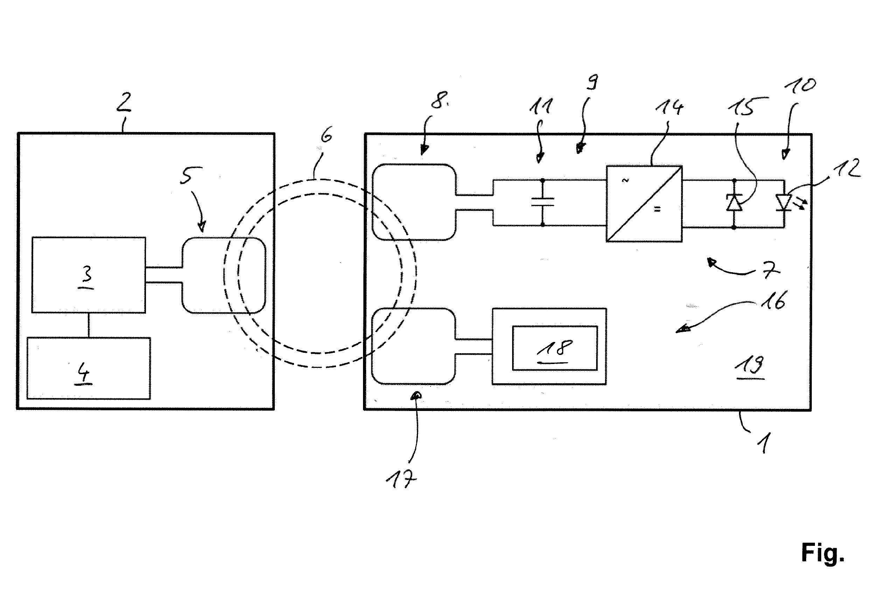

## Patentansprüche

1. Verfahren zur Funktionsprüfung einer NFC-Einrichtung, wobei Testdaten von einer NFC-Prüfeinrichtung an die in der Nähe derselben positionierten NFC-Einrichtung mittels eines Nahkoppelfeldes übertragen werden und wobei das Testergebnis angezeigt wird, **dadurch gekennzeichnet, dass** gleichzeitig eine Koppelfeldprüfung und eine Datenverarbeitungsprüfung durchgeführt werden, wobei
- bei der Koppelfeldprüfung das Vorhandensein eines durch die NFC-Einrichtung (2) erzeugten Nahkoppelfeldes (6) über eine erste Koppeleinheit (8) der NFC-Prüfeinrichtung (1) detektiert und angezeigt wird,
- bei der Datenverarbeitungsprüfung die Testdaten über eine zweite Koppeleinheit (17) der NFC-Prüfeinrichtung (1) an eine Koppeleinheit (12) der NFC-Einrichtung (2) übertragen werden und dann das Testergebnis in der NFC-Einrichtung (2) und/oder in der NFC-Prüfeinrichtung (1) angezeigt wird.

2. Vorrichtung zur Funktionsüberprüfung einer NFC-Einrichtung mit einer NFC-Prüfeinrichtung, die über einen Testdatenspeicher und eine Koppeleinheit verfügt, so dass in dem Testdatenspeicher gespeicherte Testdaten mittels der Koppeleinheit über ein Nahkoppelfeld an eine Koppeleinheit der NFC-Einrichtung übertragbar ist, und dass die NFC-Einrichtung ein NFC-Modul zur Signalaufbereitung und zur Weiterverarbeitung der Testdaten aufweist, **dadurch gekennzeichnet, dass**
- die NFC-Prüfeinrichtung (1) einen Koppelfeldprüfzweig (7) zur Prüfung des Vorhandenseins eines von der NFC-Einrichtung (2) erzeugten Nahkoppelfeldes (6) aufweist, wobei der Koppelfeldprüfzweig (7) ein mit einer ersten Koppeleinheit (8) der NFC-Prüfeinrichtung (1) verbundenes Signalaufbereitungsmodul (9) zur Aufbereitung eines mittels der ersten Koppeleinheit (8) erfassten Nahkoppelfeldsignals der NFC-Einrichtung (2) und ein Anzeigemodul (10) zur Anzeige eines aus dem Nahkoppelfeldsignal aufbereiteten Testergebnissignals,
- das die NFC-Prüfeinrichtung (1) einen Datenverarbeitungsprüfzweig (16) zur Überprüfung einer Datenübertragung zu der NFC-Einrichtung (2) aufweist, wobei der Datenverbeitungsprüfzweig (16) einen Testdatenspeicher (18) und eine zweite Koppeleinheit (17) aufweist, so dass Testdaten an das NFC-Modul der NFC-Einrichtung (2) über das Nahkoppelfeld (6) übertragbar und in dieser verarbeitbar sind, und dass Mittel vorgesehen sind zur Signalisierung des Testergebnisses.

3. Vorrichtung nach Anspruch 2, **dadurch gekennzeichnet, dass** der Koppelfeldprüfzweig (7) und der Datenverarbeitungsprüfzweig (16) auf demselben Schaltungsträger (19) angeordnet sind.

4. Vorrichtung nach Anspruch 2 oder 3, **dadurch gekennzeichnet, dass** Abstimmmittel vorgesehen sind, derart, dass die erste Koppeleinheit (8) und die zweite Koppeleinheit (17) der NFC-Prüfeinrichtung (1) mit derselben Resonanzfrequenz betrieben werden, die der Übertragungsfrequenz der NFC-Einrichtung (2) entspricht.

5. Vorrichtung nach einem der Ansprüche 2 bis 4, **dadurch gekennzeichnet, dass** die erste Koppeleinheit (8) und die zweite Koppeleinheit (17) der NFC-Prüfeinrichtung (1) sowie die Koppeleinheit (5) der NFC-Einrichtung (2) jeweils eine Spule aufweisen zur Daten- und/oder Energieübertragung im Nahkoppelnahfeld (6) durch induktive Kopplung.

6. Vorrichtung nach einem der Ansprüche 2 bis 5, **dadurch gekennzeichnet, dass** der Testdatenspeicher (18) in einer kontaktlosen Karte integriert ist, die über eine Kommunikationsschnittstelle mit einer Steuereinheit der NFC-Prüfeinrichtung (1) verbunden ist.

7. Vorrichtung nach einem der Ansprüche 2 bis 6, **dadurch gekennzeichnet, dass** die NFC-Einrichtung (2) in einem Mobiltelefon integriert angeordnet ist.

8. Vorrichtung nach einem der Ansprüche 2 bis 7, **dadurch gekennzeichnet, dass** die Testdaten durch eine standardisierte NFC-Nachricht gebildet sind.

9. Vorrichtung nach einem der Ansprüche 2 bis 8, **dadurch gekennzeichnet, dass** die NFC-Prüfeinrichtung (1) als ein ausschließlich zu Prüfzwecken vorgesehenes mobiles Gerät ausgebildet ist.

10. Vorrichtung nach einem der Ansprüche 2 bis 9, **dadurch gekennzeichnet, dass** sich die NFC-Prüfeinrichtung (1) in einem Lese-Modus befindet.

11. Vorrichtung nach einem der Ansprüche 2 bis 10, **dadurch gekennzeichnet, dass** die NFC-Prüfeinrichtung (1) einen weiteren Prüfzweig aufweist, so dass eine weitere Funktion der NFC-Einrichtung (2) überprüfbar ist.
